# EUROPEAN PATENT SPECIFICATION

(11) **EP 0 718 501 B1**
(45) Date of publication and mention of the grant of the patent: **07.03.2001**
(21) Application number: 95500166.4
(22) Date of filing: 13.12.1995
(51) Int. Cl.: F04D 9/02, F04D 15/00, F04D 1/06, F16K 15/16

(54) **Multicellular electric centrifugal pump**
Mehrstufige elektrische Kreiselpumpe
Pompe centrifuge multicellulaire électrique

(30) Priority: 20.12.1994 ES 9402600
(43) Date of publication of application: 26.06.1996
(73) Proprietor: BOMBAS ELECTRICAS, S.A. (BOELSA), E-17820 Banyoles (Gerona) (ES)
(72) Inventor: Pages Pages, José, E-17820 Banyoles (ES)
(74) Representative: SUGRANES - VERDONCES - FERREGÜELA

(56) References cited:
- WO-A-93/11360
- DE-A- 2 025 117
- FR-A- 2 342 416
- FR-A- 2 686 137
- GB-A- 986 700
- US-A- 3 698 423

## Description

### Technical field

The present invention relates to a multicellular electric centrifugal pump, provided with a pump casing which includes a suction chamber and a pressure chamber and contains an arrangement of multiple impellers about a common horizontal spindle and driven by an electric motor, of the type which includes an automatic-valve self-priming system, in which the water reaches a recirculation channel formed by the annular tubular space between the external tubular casing of the pump body and the external edges of the diffusors of the multiple impellers of the electric pump, so that water recirculation is set up in the cells and a self-priming vacuum is created.

### Background of the invention

Well-known in the art are multicellular pumps of the automatic-valve type in which some of the water is made to recirculate to the valve by a channel or duct provided between the diffusors and the external casing in order to create a self-priming arrangement. This type of pump permits automatic self-priming of the pump, for which reason such pumps are commonly termed automatic suction pumps.

Various types of valves have been designed for this class of pump, ranging from the typical helical compression or traction spring through to a flexible sheet valve, and including a valve of elastic material, such as rubber.

Valves which include a helical spring are subject to heavy deposits of residues from materials in suspension in the water drawn in, together with oxidation of the spring itself, which means that the self-priming effectiveness of this type of pump deteriorates gradually over time.

Pumps provided with elastic rubber membrane valves suffer frequent breakdowns due to breakage of said elastic membrane, while if not used frequently the rubber of said elastic material can dry out, thus losing its natural elasticity and leading to defective valve closure.

Patent FR-A-2 686 137 describes a steel sheet valve which can be attached by one of its ends to the point near the recirculation water passage orifice, while the rest of the sheet is free and can close off said recirculation orifice thanks to the flexibility of the sheet itself. However, as this sheet works in a substantially horizontal position since the recirculation water passage orifice is on a vertical axis a small grain of earth or sand can be deposited on the internal part between the zone beside the valve seat and the sheet, thus preventing correct contact with same and leading the sheet to fail to close off the passage of said recirculation water.

Moreover, although the valve of patent FR-A-2 686 137 achieves a reduction in the size of self-priming centrifugal pumps and greatly simplifies the implementation and manufacturing of the pressure chamber of same, the fact that the valve works in horizontal position means that it still occupies too much space.

### Description of the invention

The multicellular electric centrifugal pump of the invention eliminates all these disadvantages and provides a very simple and effective automatic-valve self-priming system.

In essence, the multicellular electric centrifugal pump of the invention is characterized in that it comprises a disk-shaped piece which is coaxial to the impellers, arranged in the pump casing and separating the latter from the suction chamber, said disk-shaped piece being provided with a water-recirculation passage orifice and a wide cylindrical central opening for passage of the water drawn into the pump casing, said disk-shaped piece including a recirculation water passage duct which connects the passage orifice with a side opening made in said cylindrical central opening and which includes at least a first substantially horizontal short section and a second inclined rising section, the automatic valve being formed by a flexible and elastic sheet fitted on the disk-shaped piece facing the passage orifice, said passage orifice being provided with a valve seat around it which can be closed by the floating sheet as the pressure in the pressure chamber increases, said flexible and elastic sheet being arranged facing the valve seat in a preferably vertical operation position, adjacent to two parallel ribs situated on either side of the valve seat, with at least two respective pins, disposed on the disk-shaped piece, which pass with free play through corresponding oblong orificies made in the sheet, all this in such a way that closure of the orifice is obtained by flexion of the sheet, resting on said parallel ribs, and the subsequent application of the arched sheet on the valve seat, with at least one protuberance also disposed on the disk-shaped piece and situated in face of the side of the sheet opposite to that facing the ribs and having the function of supporting the central portion of the sheet when it is in rest position.

According to another characteristic of the invention, the aforesaid recirculation water passage duct of the disk-shaped piece includes at least a first substantially horizontal short section and a second inclined section.

### Brief description of the drawings

The attach drawings show, by way of non-restrictive example, an embodiment of the pump of the invention.
Fig. 1 is a side elevation view in section showing the pump casing, the suction chamber and the pressure chamber of an electric pump in accordance with the invention.
Fig. 2 shows a section view along line A-B of Fig. 1, on a slightly enlarged scale; and
Fig. 3 shows, on a still further enlarged scale, a section view along line C-D of Fig. 2.

### Preferred embodiment of the invention

In said drawings it can be appreciated that the multicellular electric centrifugal pump in question includes a pump casing (1), a suction chamber (14) and a pressure chamber (9). The pump casing (1) is provided with multiple impellers (2) arranged on a common horizontal spindle (3) driven by an electric motor, which is not shown.

The electric pump in question includes an automatic-valve self-priming system in which the input water driven by the impellers (2) from the suction chamber (14) towards the pressure chamber (9) is made to recirculate when the electric pump is switched on, through a recirculation channel (4) formed by the annular tubular space situated between the external tubular housing (5) of the pump casing (1) and the external edges (6) of the diffusors of the multiple impellers (2) of the electric pump, in such a way as to create recirculation of water in the cells and a self-priming vacuum which leads to closure of the automatic valve, this cutting off said recirculation.

The aforesaid automatic valve is made up of an elastic and flexible floating sheet (7), facing an orifice (8) for passage of the recirculation water from the pressure chamber (9) through the channel (4).

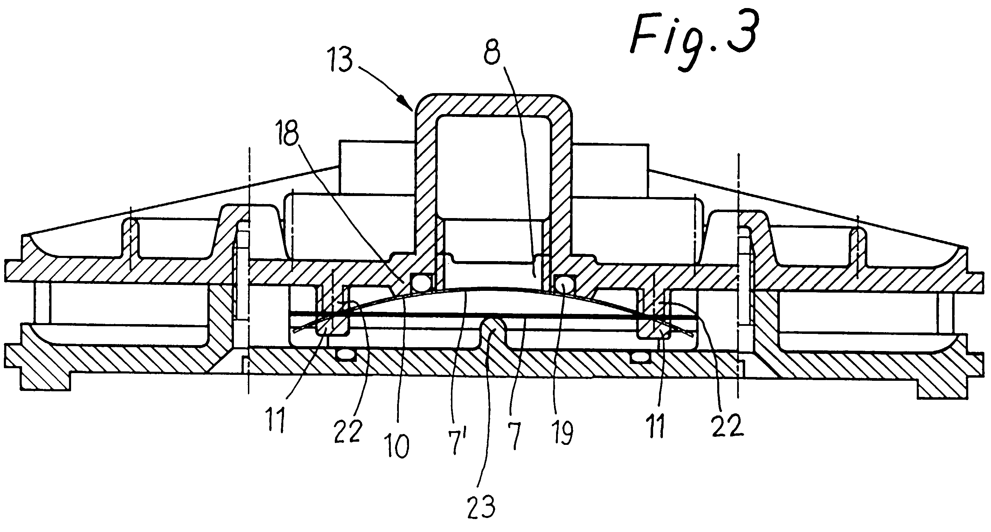

The water-passage orifice (8) is provided around its edge with a valve seat (10) which can be closed off by the floating sheet (7) when the pressure in the pressure chamber (9) increases, so that it adopts position 7' of Fig. 3.

Said floating sheet (7) is maintained facing the valve seat (10) in essentially vertical position, beside two parallel ribs (22) provided on either side of the seat (10), by means of at least two pins (11) which project from said ribs (22) and pass with free play through respective oblong orifices (12) made in the sheet (7). This permits closure of the orifice (8) by flexion of the sheet (7), resting on the ribs (22), and the subsequent application of the sheet (7) on the valve seat (10), thus adopting the aforesaid position 7'.

Facing the side of the sheet opposite that of the ribs (22) is situated a protuberance (23) centred with respect to the orifice (8), the end of which takes the weight of the sheet (7) when it is in rest position.

The floating sheet (7) is mounted on the lower zone of a disk-shaped piece (13) coaxial to the impellers (2), arranged on the pump casing (1) and separating the latter from the suction chamber (14).

The disk-shaped piece (13) is likewise provided with the orifice (8) for passage of the recirculation water of the valve seat (10), the ribs (22), the two pins (11) which hold up the floating sheet (7), and the protuberance (23), together with a wide cylindrical central opening (15) for passage of the water sucked towards the pump casing (1).

Said disk-shaped piece (13) also includes a recirculation water passage duct (16) which connects the orifice (8) of the valve seat (10) to a side opening (17) made in said cylindrical central opening (15). The duct (16) includes a first short horizontal section (20) and a second inclined rising section (21) which goes into the side opening (17).

When a high vacuum must be created because the liquid has to be pumped to a considerable height, the valve seat (10) is provided with a chamfered strip (18) of closed outline provided with a sealing 0-ring (19) designed to be secured against the floating sheet (7') during closure of the valve.

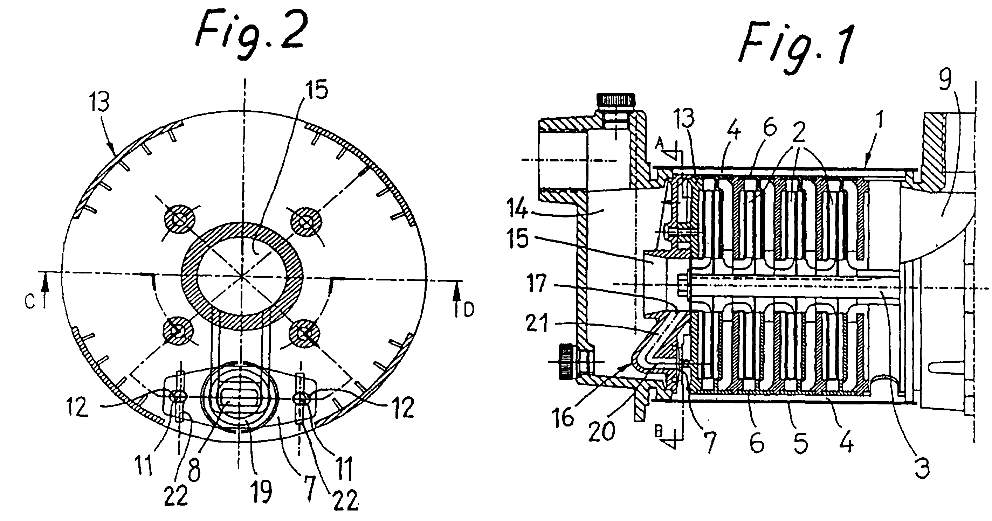

As can be appreciated from Figs. 1 and 2, the valve is situated at the lower zone of the disk-shaped piece (13).

It should be made clear that although the floating sheet (7) is designed for arrangement in an essentially vertical operating position, because that is the position in which it occupies least space in the lengthwise plane of the pump, it could also be actuated perfectly well in horizontal position, without thereby departing from the scope of the claims.

## Claims

1. A multicellular electric centrifugal pump, provided with a pump casing (1) which includes a suction chamber (14) and a pressure chamber (9) and contains an arrangement of multiple impellers (2) about a common horizontal spindle (3) and driven by an electric motor, of the type which includes an automatic-valve self-priming system, in which the water reaches a recirculation channel (4) formed by the annular tubular space between the external tubular casing (5) of the pump body (1) and the external edges (6) of the diffusors of the multiple impellers of the electric pump, so that water recirculation is set up in the cells and a self-priming vacuum is created, characterized in that it comprises a disk-shaped piece (13) which is coaxial to the impellers (2), arranged in the pump casing (1) and separating the latter from the suction chamber (14), said disk-shaped piece being provided with a water-recirculation passage orifice (8) and a wide cylindrical central opening (15) for passage of the water drawn into the pump casing, said disk-shaped piece including a recirculation water passage duct (16) which connects the passage orifice (8) with a side opening (17) made in said cylindrical central opening and which includes at least a first substantially horizontal short section (20) and a second inclined rising section (21), the automatic valve being formed by a flexible and elastic sheet (7) fitted on the disk-shaped piece (13) facing the passage orifice (8), said passage orifice being provided with a valve seat (10) around it which can be closed by the floating sheet as the pressure in the pressure chamber increases, said flexible and elastic sheet being arranged facing the valve seat in a preferably vertical operation position, adjacent to two parallel ribs (22) situated on either side of the valve seat, with at least two respective pins (11), disposed on the disk-shaped piece (13), which pass with free play through corresponding oblong orificies (12) made in the sheet, all this in such a way that closure of the orifice (8) is obtained by flexion of the sheet (7'), resting on said parallel ribs, and the subsequent application of the arched sheet on the valve seat, with at least one protuberance (23) also disposed on the disk-shaped piece (13) and situated in face of the side of the sheet opposite to that facing the ribs and having the function of supporting the central portion of the sheet when it is in rest position.

2. A multicellular electric centrifugal pump as claimed in claim 1, characterized in that the recirculation water passage duct (16) of the disk-shaped piece (13) includes at least a first substantially horizontal short section (20) and a second inclined section (21).

## Patentansprüche

1. Mehrstufige elektrische Kreiselpumpe mit einem Pumpengehäuse (1), das eine Saugkammer (14) und eine Druckkammer (9) aufweist und eine Anordnung mehrerer Laufräder (2) auf einer gemeinsamen horizontalen Welle (3) enthält und von einem Elektromotor angetrieben wird, des Typs, der ein selbstansaugendes System mit Automatikventil aufweist, bei dem das Wasser einen Umlaufkanal (4) erreicht, der durch den ringförmigen, rohrförmigen Raum zwischen dem äußeren rohrförmigen Gehäuse (5) des Pumpenkörpers (1) und den äußeren Rändern (6) der Leitapparate der mehreren Laufräder der elektrischen Pumpe gebildet ist, so daß Wasserrückführung in den Zellen angeregt wird und ein selbstansaugendes Vakuum erzeugt wird, dadurch gekennzeichnet, daß sie ein scheibenförmiges Teil (13) aufweist, das koaxial zu den Laufrädern (2) in dem Pumpengehäuse (1) angeordnet ist und letzteres von der Saugkammer (14) trennt, wobei das scheibenförmige Teil mit einer wasserrückführenden Durchgangsöffnung (8) und einer großen zylindrischen Mittelöffnung (15) zum Durchgang des in das Pumpengehäuse gesaugten Wasser versehen ist, das genannte scheibenförmige Teil einen Wasserrückführungskanal (16) aufweist, der die Durchgangsöffnung (8) mit einer Seitenöffnung (17) verbindet, die in der genannten zylindrischen Mittelöffnung ausgebildet ist und die wenigstens einen ersten, im wesentlichen horizontalen, kurzen Abschnitt (20) und einen zweiten, geneigten, ansteigenden Abschnitt (21) aufweist, wobei das Automatikventil von einer flexiblen und elastischen Folie (7) gebildet ist, die auf dem scheibenförmigen Teil (13) gegenüber der Durchgangsöffnung (8) angebracht ist, wobei die genannte Durchgangsöffnung rundum mit einem Ventilsitz (10) versehen ist, der von der schwimmenden Folie verschlossen werden kann, wenn der Druck in der Druckkammer zunimmt, wobei die flexible und elastische Folie gegenüber dem Ventilsitz in einer vorzugsweise vertikalen Betriebsstellung neben zwei parallelen Rippen (22) angeordnet ist, die sich an beiden Seiten des Ventilsitzes befinden, mit je wenigstens zwei Stiften (11), die an dem scheibenförmigen Teil (13) angeordnet sind und sich mit Spiel durch entsprechende, in der Folie ausgebildete, längliche Öffnungen (12) erstrecken, wobei all dies derart gestaltet ist, daß ein Verschließen der Öffnung (8) mittels Durchbiegung der auf den genannten parallelen Rippen liegenden Folie (7') und nachfolgender Anlage der gebogenen Folie an dem Ventilsitz erzielt wird, und mit wenigstens einem Vorsprung (23), der ebenfalls an dem scheibenförmigen Teil (13) angeordnet ist und sich gegenüber der Seite der Folie befindet, die abgewandt ist von der, die den Rippen gegenüberliegt, und den Mittelabschnitt der Folie stützen soll, wenn sie ihre Ruhestellung einnimmt.

2. Mehrstufige elektrische Kreiselpumpe nach Anspruch 1, dadurch gekennzeichnet, daß der Wasserrückführungskanal (16) des scheibenförmigen Teils (13) wenigstens einen ersten, im wesentlichen horizontalen, kurzen Abschnitt (20) und einen zweiten, geneigten Abschnitt (21) aufweist.

## Revendications

1. Une pompe centrifuge électrique multicellulaire, munie d'un carter de pompe (1) comprenant une chambre d'aspiration (14) et une chambre de pression (9) et contenant un agencement de rotors (2) multiples, autour d'une broche (3) horizontale commune et entraînés par un moteur électrique, du type comprenant un système d'auto-amorçage à soupape automatique, dans lequel l'eau atteint un canal de recirculation (4) formé par l'espace tubulaire annulaire existant entre le carter tubulaire externe (5) du corps de pompe (1) et les bords externes (6) des diffuseurs des rotors multiples de la pompe électrique, de manière que la recirculation de l'eau soit établie dans les cellules et qu'un vide d'auto-amorçage soit créé, caractérisée en ce qu'elle comprend un élément discoïde (13) coaxial aux rotors (2), agencé dans le carter de pompe (1) et séparant ce dernier vis-à-vis de la chambre d'aspiration (14), ledit élément discoïde étant muni d'un orifice de passage de recirculation d'eau (8) et d'une large ouverture centrale (15) cylindrique, pour établir le passage de l'eau aspirée dans le carter de pompe, ledit élément discoïde comprenant un conduit de passage d'eau de circulation (16) reliant l'orifice de passage (8) à une ouverture latérale (17) réalisée dans ladite ouverture centrale cylindrique et comprenant au moins une première section courte (20) sensiblement horizontale et une deuxième section montante (21) inclinée, la soupape automatique étant constituée par une feuille (7) flexible et élastique, ajustée sur l'élément discoïde (13) tourné vers l'orifice de passage (8), ledit orifice de passage étant muni d'un siège de soupape (10) autour de lui, pouvant être fermé par la feuille flottante lorsque la pression régnant dans la chambre de pression augmente, ladite feuille flexible et élastique étant agencée de manière à être tournée vers le siège de soupape dans une position de fonctionnement de préférence verticale, adjacente à deux nervures (22) parallèles situées sur chaque côté du siège de soupape, avec au moins deux tiges (11) respectives disposées sur l'élément discoïde (13), passant, avec un jeu libre, à travers des orifices oblongs (12) correspondants réalisés dans la feuille, la totalité de ceci de manière à obtenir une fermeture de l'orifice (8) par la flexion de la feuille (7'), l'application sur lesdites nervures parallèles, et l'application subséquente de la feuille arquée sur le siège de soupape, au moins une protubérance (23) étant également disposée sur l'élément discoïde (13) et située en face du côté de feuille opposé à celui tourné vers les nervures et ayant comme rôle de supporter la partie centrale de la feuille lorsqu'elle est à sa position de repos.

2. Une pompe centrifuge électrique multicellulaire selon la revendication 1, caractérisée en ce que le conduit de passage d'eau de recirculation (16) de l'élément discoïde(13) comprend au moins une première section courte (20) sensiblement horizontale et une deuxième section (21) inclinée.
